# EUROPÄISCHE PATENTANMELDUNG

(11) **EP 0 762 708 A2**
(43) Veröffentlichungstag der Anmeldung: **12.03.1997**
(21) Anmeldenummer: 96109728.4
(22) Anmeldetag: 18.06.1996
(51) Int. Cl.: H04M 1/19, H04R 1/38

(54) **Telefon mit Richtmikrofon**

(30) Priorität: 07.09.1995 DE 19533001
(71) Anmelder: Hagenuk Telecom GmbH, 24118 Kiel (DE)
(72) Erfinder: Gusella, Bernd, 24211 Honigsee (DE); Constantin, Hermann, Dipl.-Ing., 24245 Kirchbarkau (DE)
(74) Vertreter: Hansmann, Dierk, Dipl.-Ing.

(57) **Zusammenfassung**

Das Telefon weist ein Richtmikrofon auf, das von einer Mikrofonhalterung in einem Innenraum des Telefones fixiert ist. Die Mikrofonhalterung mündet in mindestens einen Durchlaß im Bereich einer Wandung des Telefones ein. Darüber hinaus ist die Mikrofonhalterung mindestens bereichsweise aus einem elastischen Material ausgebildet. Die Mikrofonhalterung ist winkelförmig ausgebildet und mit einer Schalleinlaßöffnung auf einen an einer Frontseite des Gehäuses angeordneten Stutzen aufgesteckt. Ein der vorderen Schalleinlaßöffnung abgewandt angeordnete weiterer Schalleinlaß der Mikrofonhalterung greift mit einem Halterungsprofil in eine Seitenwandung des Gehäuses ein.

## Beschreibung

Die Erfindung betrifft ein Telefon mit Richtmikrofon, das von einer Mikrofonhalterung in einem Innenraum des Telefones fixiert ist und bei dem die Mikrofonhalterung in mindestens einen Durchlaß im Bereich einer Wandung des Telefones einmündet und bei dem die Mikrofonhalterung mindestens bereichsweise aus einem elastischem Material ausgebildet ist, wobei die Mikrofonhalterung winkelförmig ausgebildet und mit einer Schalleinlaßöffnung auf einen an einer Frontseite des Gehäuses angeordneten Stutzen aufgesteckt ist.

Derartige Richtmikrofone werden in Telefonen verwendet, um eine Verständigung auch in lärmgestörter Umgebung zu unterstützen. Diese Eigenschaft ist vor allem dann von besonderer Bedeutung, wenn Mobiltelefone verwendet werden, die nicht abgewinkelt ausgebildet sind. Bei abgewinkelten Mobiltelefonen wird durch das winkelförmige Gehäuse oder entsprechend verschwenkbare Bauteile das Mikrofon näher zum menschlichen Mund positioniert. Dies hat zur Folge, daß die Verstärkung herabgesetzt werden kann und somit ebenfalls die Verstärkung von Umgebungsgeräuschen vermindert wird. Bei derartigen abgewinkelten Ausführungsformen ist deshalb im allgemeinen keine spezielle Richtcharakteristik des Mikrofons erforderlich, sondern ein Mikrofon mit Kugelcharakteristik liefert zufriedenstellende Ergebnisse.

Bei der Verwendung von Richt- oder Gradientenmikrofonen wird in der Regel ein rückwärtiger Schalleinlaß vorgesehen, durch den sich beim Besprechen von vorn über die verschiedenen Laufzeiten des Schalls zwischen einem vorderen und dem hinteren Schalleinlaß ein Druckgradient ausbildet, der die Membran des Mikrofons antreibt. Bei einer rückwärtigen Beschallung werden die Schallwege so ausgelegt, daß der Schall die Vorderseite und die Rückseite der Membran gleichzeitig erreicht, so daß nur eine geringe Auslenkung der Membran hervorgerufen wird oder eine Auslenkung sogar vollständig vermieden werden kann.

Die Verwendung eines rückwärtigen Schalleinlasses ist jedoch nicht in jedem Fall möglich, da nicht auszuschließen ist, daß bei einer üblichen Benutzung im Bereich einer Gehäuserückseite vorgesehene Öffnungen unbeabsichtigt verschlossen werden. Hierdurch wird eine erhebliche Steigerung der Empfindlichkeit des Mikrofons hervorgerufen und es werden Übersteuerungen oder Echos im Netz verursacht.

Es werden deshalb in der Regel seitliche Schalleinlässe verwendet, die derart angeordnet sind, daß ein Verschließen durch die Hand eines Benutzers bei einem normalen Gebrauch nicht erfolgen kann. Der Schall wird sowohl über eine vordere, dem Benutzer zugewandte Öffnung und über eine zusätzliche seitliche Öffnung im Gehäuse dem Mikrofon zugeleitet. Die seitliche Öffnung kann beispielsweise über eine Tülle mit dem Mikrofon verbunden sein.

Die Verwendung von derartigen seitlichen Öffnungen mit Tüllen zur Schallübertragung wird beispielsweise in der DE 42 29 450 C1 beschrieben. Hier wird die Tülle auf ein stutzenförmiges Element aufgeschoben, das einteilig mit einer Gehäusewand ausgebildet ist. Diese Konstruktion hat sich bereits bewährt, kann jedoch noch nicht alle Anforderungen an eine akustische Abdichtung des Mikrofones relativ zu einem Gehäuseinnenraum erfüllen. Insbesondere bei Mobiltelefonen ist es in der Regel nicht möglich, eine Abdichtung der Hörkapsel relativ zum Gehäuseinnenraum durch einen rückwärtigen Topf vorzunehmen . Schall aus dem Bereich der Hörkapsel gelangt somit in den Bereich des Gehäuseinnenraumes und muß daran gehindert werden, in den Bereich des Mikrofones weitergeleitet zu werden. Andernfalls können in einem digitalen Netz störende Echos erzeugt werden.

Gemäß der DE 43 36 948 C1 ist ebenfalls eine winkelförmige Mikrofonhalterung bekannt, wenngleich das Halterungselement in drei räumlichen Dimensionen schwingungsfähig gelagert ist.

Aufgabe der vorliegenden Erfindung ist es daher, ein Telefon der einleitend genannten Art derart zu konstruieren, daß eine erhöhte akustische Abdichtung bereitgestellt wird.

Diese Aufgabe wird erfindungsgemäß dadurch gelöst, daß ein dem Frontende abgewandt angeordnetes weiteres Seitenende der Mikrofonhalterung mit einem Halterungsprofil in eine Seitenwandung des Gehäuses eingreift.

Durch die Kombination einer Aufsteckbarkeit auf den dem Mikrofon zugewandt angeordneten Stutzen und das Eingreifen des Halterungsprofils in die Seitenwandung des Gehäuses wird sowohl eine einfache Montierbarkeit als auch eine hochwertige akustische Abdichtung bereitgestellt . Darüber hinaus sind die Konturen im Bereich des Gehäuses einfach formbar, so daß relativ einfach gestaltete Werkzeuge zur Herstellung des Gehäuses im Spritzgußverfahren verwendet werden können. Eine derartige Konstruktion ist insbesondere bei der Verwendung von kleinen Elektretmikrofonen von besonderer Bedeutung, deren Durchmesser im Bereich von 6 Millimeter liegt.

Zur sicheren Fixierung der Mikrofonhalterung im Bereich der Seitenwandung wird vorgeschlagen, daß die Seitenwandung eine an das Halterungsprofil angepaßte Wandungsprofilierung aufweist.

Eine einfache Fertigung wird dadurch unterstützt, daß das Halterungsprofil eine im wesentlichen gerundet begrenzte Querschnittfläche aufweist.

Zur Bereitstellung einer definierten Positionierung ist es auch möglich, daß das Halterungsprofil eine im wesentlichen polygonförmig begrenzte Querschnittfläche aufweist.

Eine labyrinthartige Struktur zur Dämpfung von austretendem Schall wird dadurch bereitgestellt, daß das Halterungsprofil im Bereich seiner dem Gehäuseinnenraum abgewandten Ausdehnung einen größeren Durchmesser als im Bereich seiner dem Gehäuseinnenraum zugewandten Ausdehnung aufweist.

Eine Fixierung der Mikrofonhalterung wird dadurch unterstützt, daß ein mit größerem Durchmesser versehenes Außensegment der Wandungsprofilierung in ein mit einem geringeren Durchmesser versehenes Innensegment von einer Stufe übergeleitet ist.

Eine elastische Anlage der Mikrofonhalterung am Gehäuse zur Abdichtung wird dadurch unterstützt, daß das Halterungsprofil flanschartig ausgebildet ist. Dieser außen sichtbare Flansch kann auch das Design positiv beeinflussen.

Zur Anpassung an eine entsprechende Gehäuseprofilierung wird vorgeschlagen, daß zwei Flansche vorgesehen sind.

Ein elektrischer Anschluß des Mikrofons wird dadurch unterstützt, daß die Mikrofonhalterung eine Drahtdurchführung aufweist.

Zur definierten Positionierung der Mikrofonhalterung relativ zum Mikrofon wird vorgeschlagen, daß zur Positionierung des Mikrofones innerhalb der Mikrofonhalterung im Bereich eines Halterungsinnenraumes der Mikrofonhalterung ein Absatz angeordnet ist.

In der Zeichnung sind Ausführungsbeispiele der Erfindung schematisch dargestellt. Es zeigen:

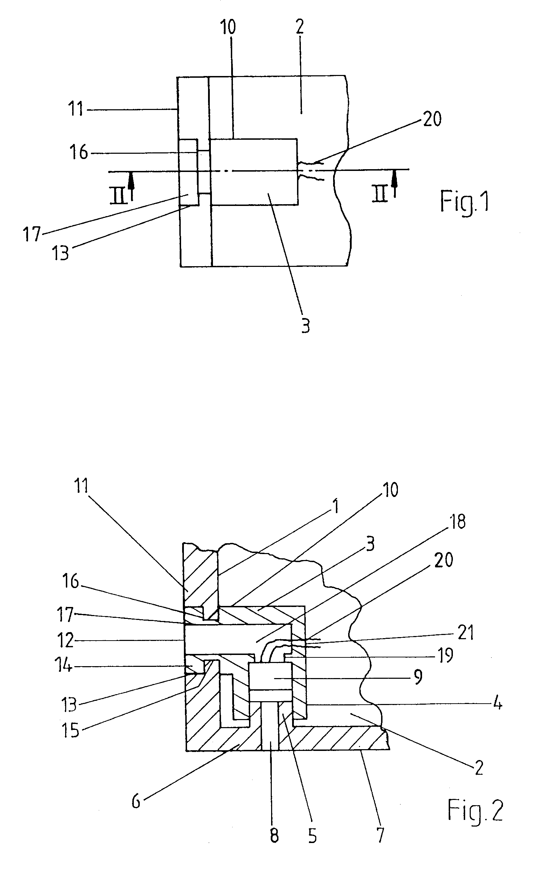

- Fig. 1:: eine teilweise Darstellung eines Horizontalschnittes durch ein Gehäuse im Bereich des in die Seitenwandung eingreifenden Halterungsprofils
und
- Fig. 2:: einen Querschnitt gemäß Schnittlinie II-II in Fig. 1.

Im Bereich eines Gehäuses (1), das einen Gehäuseinnenraum (2) umschließt, ist eine Mikrofonhalterung (3) aus einem elastischen Material angeordnet. Die Mikrofonhalterung (3) ist im wesentlichen winkelförmig ausgebildet und mit einer Schalleinlaßöffnung (4) auf einen Stutzen (5) aufgesteckt, der sich ausgehend von einer Frontseite (6) des Gehäuses (1) in Richtung auf den Gehäuseinnenraum (2) erstreckt. Durch den Stutzen (5) hindurch erstreckt sich ausgehend von einer Gehäusevorderseite (7) eine Durchgangsausnehmung (8) in Richtung auf ein Mikrofon (9), das zum Stutzen (5) hinweist. Das Mikrofon (9) ist von der Mikrofonhalterung (3) umschlossen.

Im Bereich einer der Schalleinlaßöffnung (4) abgewandt angeordneten Seite (8) greift die Mikrofonhalterung (3) in eine Seitenwandung (11) des Gehäuses (1) ein. Eine Seitenausnehmung (12) der Seitenwandung (11) weist hierzu eine Wandungsprofilierung (13) auf, die aus einem Außensegment (14) und einem Innensegment (15) besteht, die durch eine Stufe (16) ineinander übergeleitet sind und von denen das Außensegment (14) einen gleichen oder größeren Durchmesser als das Innensegment (15) besitzt.

Korrespondierend zur Form der Wandungsprofilierung (13) ist ein Halterungsprofil (17) der Mikrofonhalterung (3) ausgebildet, das von der Seitenausnehmung (12) aufnehmbar ist. Nach einem Einführen des Halterungsprofiles (17) in die Wandungsprofilierung (13) ist sowohl eine Fixierung der Mikrofonhalterung (3) im Bereich des Gehäuseinnenraumes (2) erfolgt und zusätzlich erfolgt eine Abdichtung durch ein labyrinthartiges Profil gegenüber dem Gehäuseinnenraum (2).

Zur Gewährleistung einer definierten Positionierung der Mikrofonhalterung (3) relativ zum Mikron (9) ist in einem Halterungsinnenraum (18) ein Absatz (19) angeordnet, der das Mikrofon (9) im Bereich dessen dem Stutzen (5) abgewandter Ausdehnung beaufschlagt. Anschlußkabel (20) des Mikrofons (9) erstrecken sich durch Drahtdurchführungen (21) der Mikrofonhalterung (3) hindurch.

Insbesondere ist daran gedacht, die Mikrofonhalterung (3) in etwa rechtwinklig gestaltet auszubilden. Der Stutzen (5) und die Wandungsprofilierung (13) können beispielsweise gerundet, insbesondere kreisförmig, bezüglich ihrer Querschnittflächen gestaltet sein. Es sind aber ebenfalls kantige Gestaltungen, beispielsweise eine quadratische Ausführung, möglich. Entsprechend angepaßt ist die Mikrofonhalterung (3) im Bereich der Schalleinlaßöffnung (4) und des Seitenendes (10) gestaltet.

Es ist ebenfalls daran gedacht, die Mikrofonhalterung (3) im Bereich ihres Seitenendes (10) mit zwei Flanschen zu versehen, die sich um die Seitenausnehmung (12) des Gehäuses (1) herumlegen. In Richtung auf den Gehäuseinnenraum (2) wird von den Flanschen eine Dichtwirkung hervorgerufen. Die Flansche legen sich durch ihre Elastizität eng an das Gehäuse (1) an und bewirken hierdurch die erforderliche Abdichtung. Darüber hinaus wird durch die Flansche eine Umwegleitung bereitgestellt, die eventuell doch austretenden Schall einer nach innen offenen Hörkapsel vom seitlichen Mikrofoneinlaß wegleiten.

Die Flansche bzw. das Halterungsprofil (17), können derart gestaltet sein, daß sie außenbündig mit dem Gehäuse (1) abschließen. Ebenfalls ist es aber möglich, beispielsweise vorstehende oder zurückliegende Gestaltungen vorzusehen, um gestalterische Anpassungen vorzunehmen. Eine weitere Gestaltungsmöglichkeit besteht in der Auswahl von farbigen Materialien für die Flansche beziehungsweise das Halterungsprofil (17).

Bei einer Montage wird die Mikrofonhalterung (3) im Bereich einer Gehäuseschale des Gehäuses (1) montiert. Dies hat zur Folge, daß kein Druck auf die weiche Mikrofonhalterung (3) bei einer Benutzung ausgeübt wird. Undichtigkeiten aufgrund von plastischen oder elastischen Verformungen werden hierdurch vermieden.

## Patentansprüche

1. Telefon mit Richtmikrofon, das von einer Mikrofonhalterung in einem Innenraum des Telefones fixiert ist und bei dem die Mikrofonhalterung in mindestens einen Durchlaß im Bereich einer Wandung des Telefones einmündet und bei dem die Mikrofonhalterung mindestens bereichsweise aus einem elastischen Material ausgebildet ist, wobei die Mikrofonhalterung winkelförmig ausgebildet und mit einer Schalleinlaßöffnung auf einen an einer Frontseite des Gehäuses angeordneten Stutzen aufgesteckt ist, dadurch gekennzeichnet, daß ein der Schalleinlaßöffnung (4) abgewandt angeordnetes weiteres Seitenende (10) der Mikrofonhalterung (3) mit einem Halterungsprofil (17) in eine Seitenwandung (11) des Gehäuses (1) eingreift.

2. Telefon nach Anspruch 1, dadurch gekennzeichnet, daß die Seitenwandung (11) eine an das Halterungsprofil (17) angepaßte Wandungsprofilierung (13) aufweist.

3. Telefon nach Anspruch 1 oder 2, dadurch gekennzeichnet, daß das Halterungsprofil (17) eine im wesentlichen gerundet begrenzte Querschnittfläche aufweist.

4. Telefon nach Anspruch 1 oder 2, dadurch gekennzeichnet, daß das Halterungsprofil (17) eine im wesentlichen polygonförmig begrenzte Querschnittfläche aufweist.

5. Telefon nach einem der Ansprüche 1 bis 4, dadurch gekennzeichnet, daß das Halterungsprofil (17) im Bereich seiner dem Gehäuseinnenraum (2) abgewandten Ausdehnung einen größeren Durchmesser als im Bereich seiner dem Gehäuseinnenraum (2) zugwandten Ausdehnung aufweist.

6. Telefon nach einem der Ansprüche 1 bis 5, dadurch gekennzeichnet, daß ein mit größerem Durchmesser versehenes Außensegment (14) der Wandungsprofilierung (13) in ein mit einem geringeren Durchmesser versehenes Innensegment (15) von einer Stufe (16) übergeleitet ist.

7. Telefon nach einem der Ansprüche 1 bis 6, dadurch gekennzeichnet, daß das Halterungsprofil (17) flanschartig ausgebildet ist.

8. Telefon nach Anspruch 7, dadurch gekennzeichnet, daß zwei Flansche vorgesehen sind.

9. Telefon nach einem der Ansprüche 1 bis 8, dadurch gekennzeichnet, daß die Mikrofonhalterung (3) eine Drahtdurchführung (21) aufweist.

10. Telefon nach einem der Ansprüche 1 bis 9, dadurch gekennzeichnet, daß zur Positionierung des Mikrofones (9) innerhalb der Mikrofonhalterung (3) im Bereich eines Halterungsinnenraumes (18) der Mikrofonhalterung (3) ein Absatz (19) angeordnet ist.
